# EUROPEAN PATENT APPLICATION

(11) **EP 4 047 189 A1**
(43) Date of publication of application: **24.08.2022**
(21) Application number: 21214556.9
(22) Date of filing: 14.12.2021
(51) Int. Cl.: F01D 11/00, F01D 11/02, F16J 15/44

(54) **NON-CONTACTING SEAL ASSEMBLY WITH INTERNAL COATING**

(30) Priority: 19.02.2021 US 202117179645
(71) Applicant: Raytheon Technologies Corporation, Farmington, CT 06032 (US)
(72) Inventor: CHUONG, Conway, Manchester, CT 06040 (US); PASKIND, Jeremy K., Glastonbury, CT 06033 (US); SYLVESTER, Shane R., Cromwell, CT 06416 (US)
(74) Representative: Dehns

(57) **Abstract**

A seal assembly (80), including: a seal (82), the seal (82) having; a support ring (104), a shoe (102), and a beam (106) extending between the shoe (102) and the support ring (104), wherein the shoe (102) moves relative to the support ring (104) via the beam (106); a spacer (84) and a second seal; a seal ring (94); a carrier ring (96), the second seal being located adjacent to one end of the shoe (102) and the seal ring (94) being located adjacent to an opposite end (126) of the shoe (102) and the carrier ring (96) extends from the seal ring (94) to the spacer (84), the carrier ring (96) being adjacent to the support ring (104) of the seal (82); and a wear resistant coating (136) located between a surface (128) of the seal ring (94) and an opposite end (126) of the shoe (102).

## Description

### BACKGROUND

This disclosure relates generally to a gas turbine engine, and more particularly to seal assemblies for use with the gas turbine engine.

Gas turbine engines typically include a fan delivering air into a compressor, and also outwardly of the compressor as bypass air. The air is compressed in the compressor and delivered downstream into a combustion section where it is mixed with fuel and ignited to generate hot combustion gases. The hot combustion gases are communicated through the turbine section, which extracts energy from the hot combustion gases to power the compressor section and other gas turbine engine loads. Products of this combustion pass downstream over turbine rotors, driving the turbine rotors to rotate. The turbine rotors in turn rotate the compressors and fan.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

The fan and compressor are typically driven by the turbine rotors via shafts. Seals may be provided around the shafts.

### BRIEF DESCRIPTION

According to a first aspect there is provided a seal assembly, including: a seal, the seal having; a support ring, a shoe, and a beam extending between the shoe and the support ring, wherein the shoe moves relative to the support ring via the beam; a spacer and a second seal; a seal ring; a carrier ring, the second seal being located adjacent to one end of the shoe and the seal ring being located adjacent to an opposite end of the shoe and the carrier ring extends from the seal ring to the spacer, the carrier ring being adjacent to the support ring of the seal; and a wear resistant coating located between a surface of the seal ring and an opposite end of the shoe.

Optionally, the wear resistant coating may be located on the surface of the seal ring.

Optionally, the wear resistant coating may be located on the opposite end of the shoe.

Optionally, the wear resistant coating may be located on the surface of the seal ring and the opposite end of the shoe.

Optionally, the seal ring may have a plurality of scalloped openings located between a plurality of tab portions of the seal ring and the wear resistant coating may be located on the plurality of tab portions.

Optionally, the wear resistant coating may be located in a notch formed on each of the plurality of tab portions.

Optionally, the plurality of scalloped openings may provide fluid communication to the seal.

Optionally, the carrier ring and the seal ring may be formed as a single unitary structure.

Optionally, the wear resistant coating may be a cobalt based wear coating.

Optionally, the secondary seal may comprise a first secondary seal and a second secondary seal.

According to another aspect there is provided a gas turbine engine, including: a compressor section; a combustor fluidly connected to the compressor section; a turbine section fluidly connected to the combustor; a seal assembly, located between a rotatable component of the gas turbine engine and a static structure of the gas turbine engine, the seal assembly including: a seal comprising; a support ring, a shoe, and a beam extending between the shoe and the support ring, wherein the shoe moves relative to the support ring via the beam; a spacer and a second seal; a seal ring; a carrier ring, the second seal being located adjacent to one end of the shoe and the seal ring being located adjacent to an opposite end of the shoe and the carrier ring extends from the seal ring to the spacer, the carrier ring being adjacent to the support ring of the seal; and a wear resistant coating located between a surface of the seal ring and an opposite end of the shoe.

Optionally, the wear resistant coating may be located on the surface of the seal ring.

Optionally, the seal ring may have a plurality of scalloped openings located between a plurality of tab portions of the seal ring and the wear resistant coating may be located on the plurality of tab portions.

Optionally, the wear resistant coating may be located in a notch formed on each of the plurality of tab portions.

Optionally, the plurality of scalloped openings may provide fluid communication to the seal.

Optionally, the wear resistant coating may be a cobalt based wear coating.

According to another aspect there is provided a method of preventing a shoe of a seal assembly from contacting a rotatable component of a gas turbine engine, the method including the steps of: locating a wear resistant coating between a surface of a seal ring and a distal end of a shoe of a seal of a seal assembly of the gas turbine engine, wherein the seal comprises; a support ring and a beam extending between the shoe and the support ring, wherein the shoe moves relative to the support ring via the beam; a spacer and a second seal; a carrier ring, the second seal being located adjacent to one end of the shoe and the seal ring being located adjacent to the distal end of the shoe and the carrier ring extends from the seal ring to the spacer, the carrier ring being adjacent to the support ring of the seal.

### BRIEF DESCRIPTION OF THE DRAWINGS

The following descriptions should not be considered limiting in any way. With reference to the accompanying drawings, like elements are numbered alike:
FIG. 1 is a schematic, partial cross-sectional view of a gas turbine engine;
FIG. 2 is a schematic view of a two-stage high pressure turbine of the gas turbine engine;
FIG. 3 is a cross-sectional view of a non-contacting seal assembly;
FIG. 4 is a view along lines 4-4 of FIG. 3;
FIG. 5 is a cross-sectional view of a non-contacting seal assembly;
FIG. 6 is a cross-sectional view of a non-contacting seal assembly; and
FIG. 7 is a perspective view of a portion of a non-contacting seal assembly.

### DETAILED DESCRIPTION

A detailed description of one or more embodiments of the disclosed apparatus and method are presented herein by way of exemplification and not limitation with reference to the FIGS.

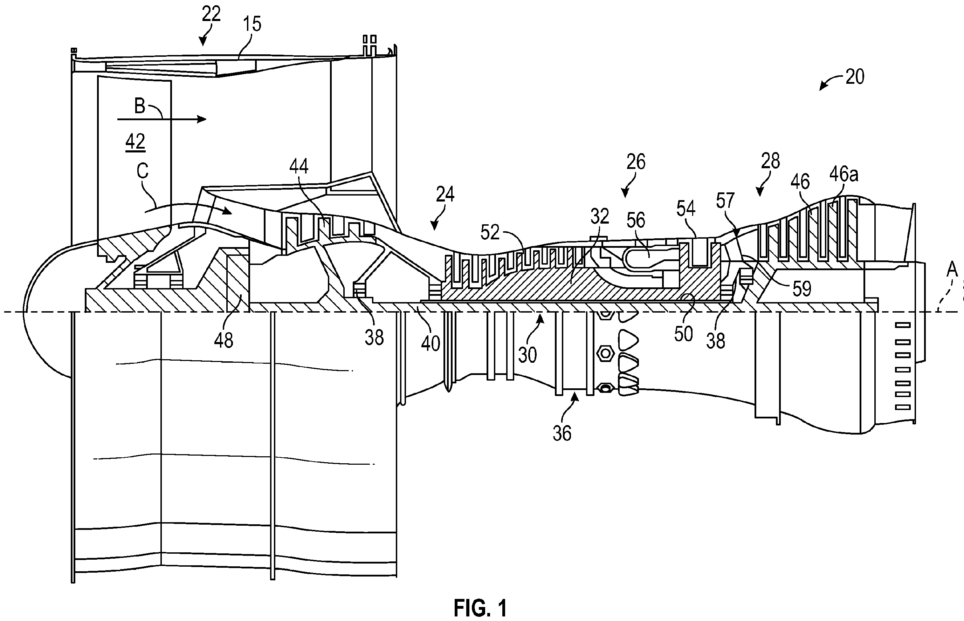

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C1 for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first or low pressure compressor 44 and a first or low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second or high pressure compressor 52 and a second or high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of pound-mass (lbm) of fuel per hour being burned divided by pound-force (lbf) of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

In a further example, the fan 42 includes less than about 26 fan blades. In another non-limiting embodiment, the fan 42 includes less than about 20 fan blades. Moreover, in one further embodiment the low pressure turbine 46 includes no more than about 6 turbine rotors schematically indicated at 46a. In a further non-limiting example the low pressure turbine 46 includes about 3 turbine rotors. A ratio between the number of blades of the fan 42 and the number of low pressure turbine rotors 46a is between about 3.3 and about 8.6. The example low pressure turbine 46 provides the driving power to rotate the fan section 22 and therefore the relationship between the number of turbine rotors 46a in the low pressure turbine 46 and the number of blades in the fan section 22 discloses an example gas turbine engine 20 with increased power transfer efficiency.

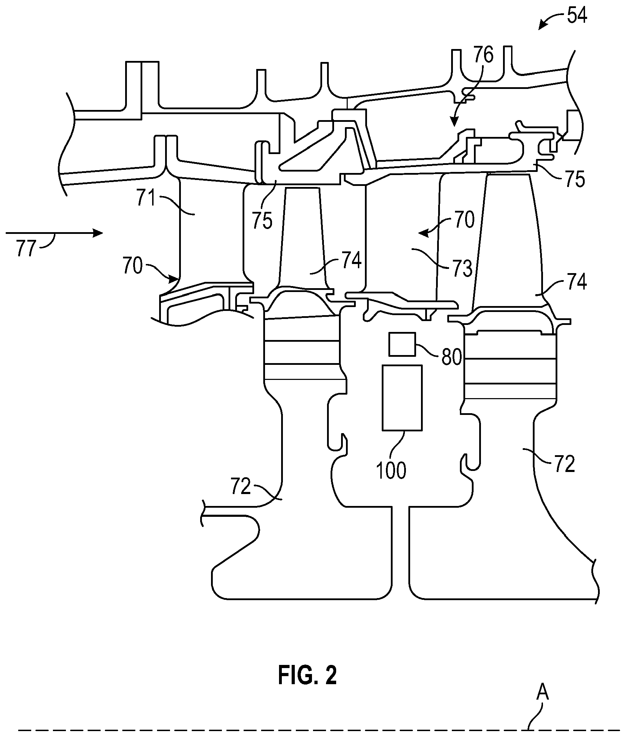

FIG. 2 illustrates a portion of the high pressure turbine (HPT) 54. FIG. 2 also illustrates a high pressure turbine stage vanes 70 one of which (e.g., a first stage vane 71) is located forward of a first one of a pair of turbine disks 72 each having a plurality of turbine blades 74 secured thereto. The turbine blades 74 rotate proximate to blade outer air seals (BOAS) 75 which are located aft of the first stage vane 71. The other vane 70 is located between the pair of turbine disks 72. This vane 70 may be referred to as the second stage vane 73. As used herein the first stage vane 71 is the first vane of the high pressure turbine section 54 that is located aft of the combustor section 26 and the second stage vane 73 is located aft of the first stage vane 71 and is located between the pair of turbine disks 72. In addition, blade outer air seals (BOAS) 75 are disposed between the first stage vane 71 and the second stage vane 73. The high pressure turbine stage vanes 70 (e.g., first stage vane 71 or second stage vane 73) are one of a plurality of vanes 70 that are positioned circumferentially about the axis A of the engine in order to provide a stator assembly 76. Hot gases from the combustor section 26 flow through the turbine in the direction of arrow 77. Although a two-stage high pressure turbine is illustrated other high pressure turbines are considered to be within the scope of various embodiments of the present disclosure as defined by the claims.

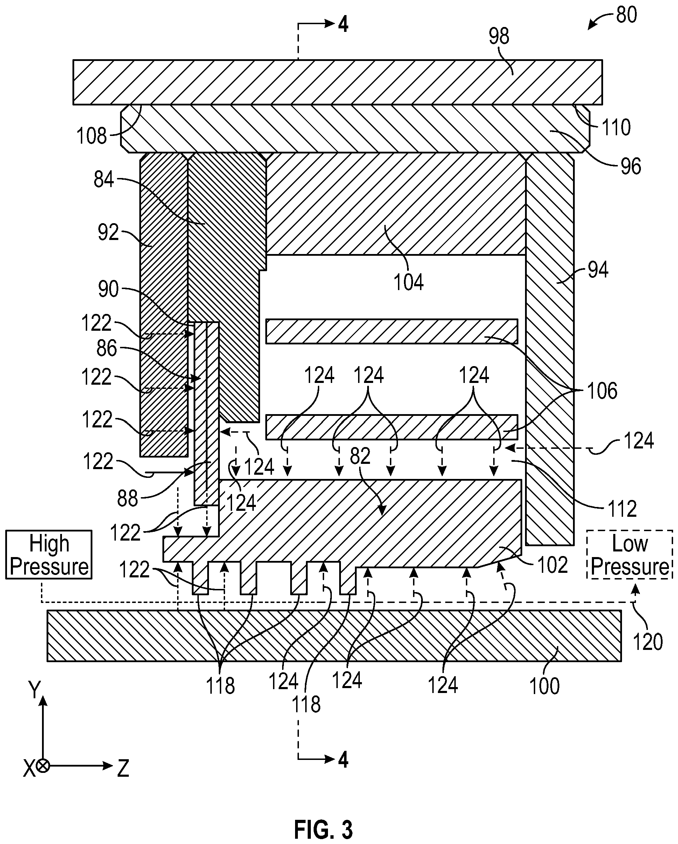

Referring now to FIG. 3, a cross-section view of a seal assembly 80 is illustrated. The seal assembly 80 may include a seal 82, a spacer 84, at least one secondary seal 86, which may comprise a first secondary seal 88 and/or a second secondary seal 90, a secondary seal cover 92, a seal ring 94, and a carrier ring 96. In various embodiments, a turbine static structure or other static structure 98 of the gas turbine engine may circumferentially surround seal arrangement 80. In addition, the seal arrangement 80 may be snapped into static structure 98. The secondary seal cover 92 may be snapped into carrier ring 96 and the seal ring 94 may be snapped into carrier ring 96.

In one embodiment, seal ring 94 and carrier ring 96 are formed as two separate members. Alternatively, seal ring 94 and carrier ring 96 are formed as a single, monolithic member. In various embodiments, spacer 84 may be snapped into carrier ring 96. In addition, seal 82 may be snapped into carrier ring 96. Still further, seal ring 94 may be snapped into carrier ring 96.

Seal assembly 80 may circumferentially surround a rotating member or rotatable component 100 of the gas turbine engine. In one embodiment, the rotating member or rotatable component 100 may be a turbine rotating structure. FIG. 2 schematically illustrates one non-limiting location of seal assembly 80 and rotating member 100.

However and in one alternative, it is contemplated that the rotating member 100 may circumferentially surround the seal assembly 80 or be axially adjacent seal assembly 80 without departing from the scope of the present invention as defined by the claims. In this regard, seal 82 may be configured to be coupled within rotating member 100, around rotating member 100, or axially adjacent rotating member 100. In this regard, the rotational axis of rotating member 100 may extend parallel the Z-direction and be located either above (in the positive Y-direction) or below (negative Y-direction) rotating member 100 in FIG. 3.

Seal 82 includes a plurality of shoes 102 connected to a support or support ring 104 via one or more beams or arms 106. The seal 82 as shown has shoes 102 and a support ring 104. In various embodiments, the shoes 102 may be disposed radially inward from support ring 104. In one embodiment, the support ring 104 and the shoes 102 are generally formed from a single piece of metal, and may be cut in order to provide the configurations shown in the FIGS. such that the combined non-contact seal 82 is formed into segments. As shown, the cuts may provide a gap that allows the beams or arms 106 to provide a spring force. The shoes 102 may move (e.g., radially) relative to support ring 104 via arms or beams 106.

As described herein, seal 82 may comprise a non-contact seal. In this regard, seal 82 may be configured to not physically contact rotating member 100 during certain operational modes of an engine. Stated differently, seal 82 may be configured to maintain a gap between rotating member 100 and the shoe 102. However, it should be noted that seal 82 may physically contact rotating member 100 during certain conditions, such as when the engine is off, or may momentarily contact rotating member 100 during various engine conditions. In this regard, the term "non-contact," as used herein, may refer to a seal which utilizes hydrostatic principles to reduce leakage. Furthermore, it is contemplated that the methods described herein may be used for any suitable seal for increasing seal clearance with respect to a rotating member during assembly without departing from the scope of the present invention as defined by the claims.

Carrier ring 96 may comprise a distal surface or radially outward surface 108 and static structure 98 may comprise a proximal surface or radial inward surface 110. Distal surface 108 may be in contact proximal surface 110. In various embodiments, carrier ring 96 may be snapped into static structure 98. In various embodiments, carrier ring 96 may be threaded into static structure 98. In other embodiments, carrier ring 96 may attach to the static structure via mechanical means, such as fasteners.

In one embodiment, the seal 82, spacer 84, first secondary seal 88, second secondary seal 90, secondary seal cover 92, seal ring 94 and/or carrier ring 96 may comprise an annular geometry. Seal 82, spacer 84, first secondary seal 88, second secondary seal 90, secondary seal cover 92, seal ring 94 and/or carrier ring 96 may be rings.

Rotating member 100 may be mounted for rotation about engine central longitudinal axis A. In various embodiments, rotating member 100 may comprise low speed spool 30. In various embodiments, rotating member 100 may comprise high speed spool 32. In various embodiments, rotating member 100 comprises any suitable rotating member incorporating a non-contact seal. For example, the non-contact seal may be associated with the turbine section, the compressor section, or the fan section of a gas turbine engine. In other non-limiting embodiments, the rotating member 100 may also be a stationary piece.

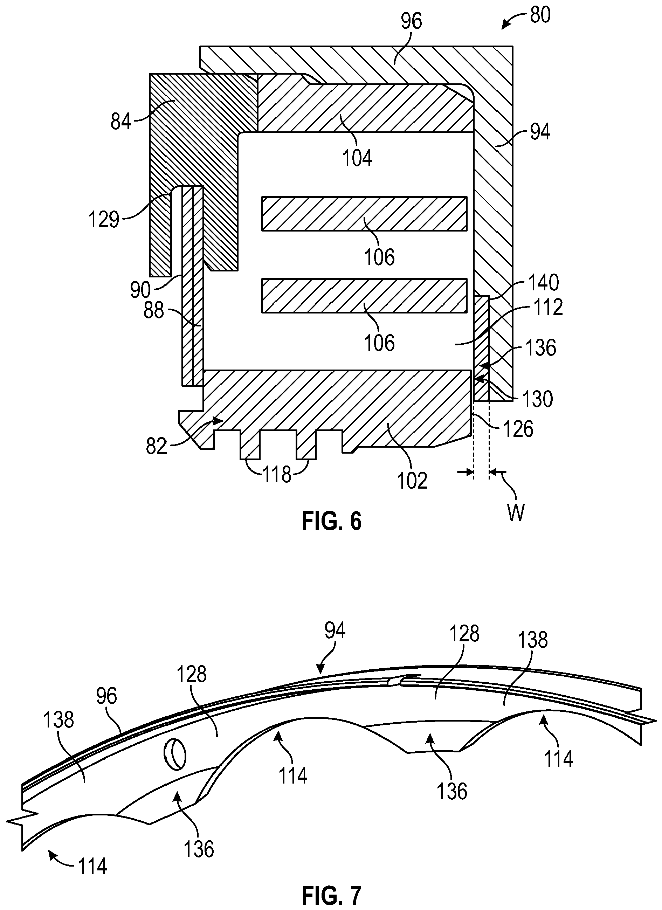

With reference to at least FIG. 3, a fluid, such as air for example, may travel from the high pressure side of seal assembly 80 to the low pressure side of seal assembly 80. First secondary seal 88 and second secondary seal 90 may prevent fluid from high pressure side of seal arrangement 80 from entering a gap 112 of seal 82. In various embodiments, seal ring 94 may comprise a scalloped ring 94 (See FIG. 7). Seal ring 94 may be made from a metal or metal alloy. In one non-limiting embodiment, the seal ring may be formed from nickel, nickel alloy or cobalt materials and combinations to meet strength and temperature requirements. Other non-limiting materials include: Nickel Alloy 718, INCONEL 718, Waspaloy (Alloy 685). In this regard, seal ring 94 may comprise a plurality of scalloped openings 114 which allow fluid from low pressure side of seal assembly 80 into gap 112 of seal 82.

As mentioned above, the seal 82 includes a shoe 102 attached to the support ring 104 via arms or beams 106. In this regard, it should be appreciated that the pressure gradient across seal 82 may act to move shoe 102 in the radial direction (Y-direction) illustrated by arrows 116 with respect to support ring 104. This movement may aid in preventing shoe 102 from contacting rotating member 100. The shoe 102 of seal 82 may also comprise a plurality of teeth or at least one tooth 118 that extend(s) radially inward from shoe 102.

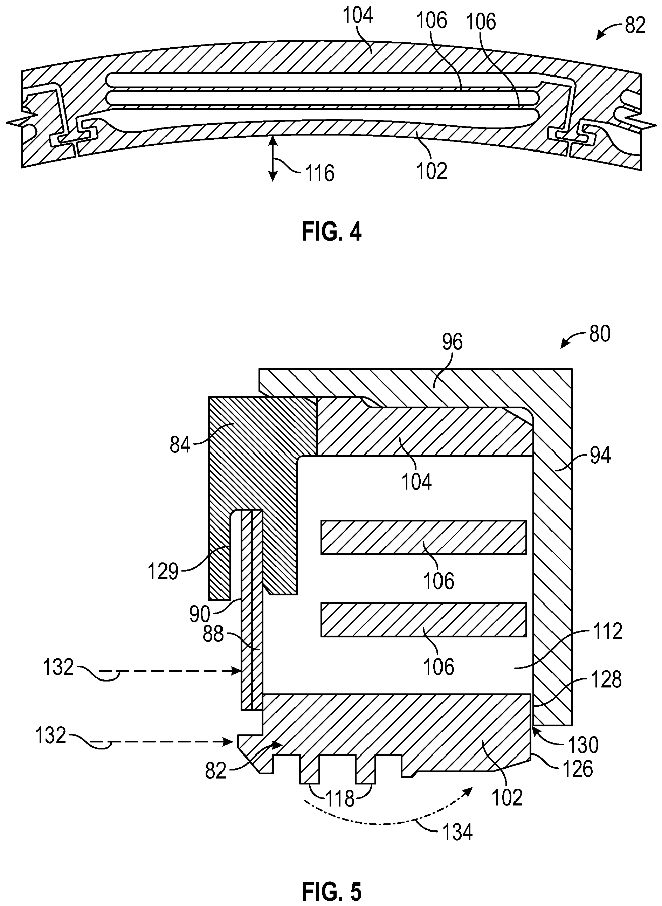

As illustrated in at least FIG. 4, air flows from the high pressure side to the low pressure side in the direction of arrow 120. High pressure air flow is illustrated generally with arrows 122 while the low pressure air flow is generally illustrated with arrows 124.

As the air flows past teeth 118 in the direction of arrow 120 the pressure field changes from high to low. Balance between the high and low pressure sides causes the shoe 102 to actuate up and down in the direction of arrows 116, until equilibrium is achieved. As such, the shoe 102 swings on beams 106 and actuates up and down.

This force balance allows the seal 82 to be adaptive to changing seal gaps and maintain tighter clearances. In addition, the dual-beam design causes the shoe 102 to move in predominantly radial direction.

Since the seal 82 functions by having the shoe 102 moving up and down. An aft or distal end 126 of the shoe 102 rubs against a downstream plate surface 128 of the seal ring 94. As illustrated in FIG. 5, the seal ring 94 and carrier ring 96 are formed as a unitary single structure. In addition and as illustrated in FIG. 5, the spacer 84 and secondary seal cover 92 are formed as a unitary single structure having a slot 129 into which a portion of the first secondary seal 88 and the second secondary seal 90 are received. This unitary structure with slot 129 may be referred to as spacer 84.

As illustrated in FIG. 5, a wear interface 130 between the shoes 102 and the downstream seal ring, plate or scalloped plate 94 occurs. Over time, the aft or distal end 126 of the shoe 102 and the downstream plate surface 128 may experience wear and performance of the seal assembly 80 may be negatively impacted. For example, the surfaces of the aft or distal end 126 of the shoe 102 and the downstream plate surface 128 may gall and result in sticking and reduction of smooth motion and response. As such, the shoes 102/teeth 118 may contact with the rotor or rotating member 100 if they are unable to translate out of the way. Alternatively, the shoes may become stuck in an outboard position, resulting in excessive leakage through the radial gap.

FIG. 5 also illustrates the delta pressure load in the direction of arrows 132. As used herein, delta pressure load in the direction of arrows 132 refers to the difference between air flows from the high pressure side to the low pressure side in the direction of arrow 120.

As such and if the aft or distal end 126 of the shoe 102 and the downstream plate surface 128 stick preventing motion in the direction of arrows 116 the shoe 102 may rock or rotate in the direction of arrow 134 due to the delta pressure load in the direction of arrows 132. This is undesirable as this may result in the shoe and/or its teeth contacting the rotating member 100 or becoming stuck open and allowing leakage.

In accordance with one non-limiting embodiment, the seal assembly is configured to operate where the delta pressure load in the direction of arrows 132 is in the range of 1 psi (6.9 kPa) to 50 psi (340 kPa). Other non-limiting ranges include 50 psi (340 kPa) to 250 psi (1.7 MPa) and 250 psi (1.7 MPa) to 600 psi (4.1 MPa).

Referring now to FIGS. 6 and 7 and in order to prevent the aforementioned sticking of the shoe 102, a wear coating 136 is applied to the downstream plate surface 128, internal to the seal assembly 80. In one embodiment, the wear coating 136 is applied to tab portions 138 of the scalloped seal ring 94. In other words, the wear coating 136 is applied to the downstream plate surface 128 of the seal ring 94 and in particular on the tab portions 138 that are location on opposite sides of the scallop openings 114. In addition and in order to provide a receiving area for wear coating 136, a notch 140 is formed in the tab portions 138 prior to the application of wear coating 136. Thus, the wear coating may be deposited in the notch 140 formed in the downstream plate surface 128 of tab portions 138 of the seal ring 94.

In one non-limiting embodiment, a thickness "W" (see FIG. 6) of the wear coating 136 in an axial direction (e.g., from the notch 140 to a surface of the wear coating 136 that contacts the aft or distal end 126 of the shoe 102 is in the range of 0.002" (0.05 mm) to 0.015" (0.38 mm). Other non-limiting ranges for the thickness "W" of the wear coating 136 include but are not limited to 0.002" (0.05 mm) to 0.005" (0.13 mm); 0.005" (0.13 mm) to 0.010" (0.25 mm); and 0.010" (0.25 mm) to 0.015" (0.38 mm).

In one non-limiting embodiment, the wear coating 136 is a cobalt based wear coating. Other non-limiting examples of wear coating 136 include but are not limited to chromium carbide, tungsten carbide, molybdenum, cobalt alloys, and equivalents thereof.

In one non-limiting embodiment, the wear coating 136 may be applied by a plasma spray process, flame spray, dual wire arc thermal spray, detonation gun, thermal spray process or a high velocity oxy-fuel (HVOF) thermal spray process or other thermal processes.

The wear coating 136 reduces friction between the shoes 102 and downstream plate surface 128, and further reduces the long term wear between the mating surfaces of the shoes 102 and the seal ring 94.

In one non-limiting embodiment, the wear coating 136 is applied prior to assembly of the seal assembly 80 and is contained within the seal assembly 80.

As mentioned above, the wear coating 136 allows the surfaces of the shoes 102 and the seal ring 94 to slide more freely and reduce the chance of adhesion between the two surfaces. In addition, the wear coating also prevent adhesive wear to the shoes 102 and/or the seal ring 94. This reduces the probability of the shoes 102 and/or their associated teeth 118 from contacting the rotor 100 thereby mitigating rotor damage and/or failure of the seal assembly 80. The reduction in wear rate also results in increased life of the seal assembly 80 and the wear coating 136 can reduce friction and improve performance of the seal 80.

In one non-limiting embodiment, the wear coating 136 may be specific to certain environments the seal 82 is exposed to. Through use of different wear coating materials the wear coating 136 allows the coefficient of friction between the shoes 102 and the seal ring 96 to be tuned such that the seal 82 behaves in an optimal fashion. The seal 82 can also be optimized to minimize excessive vibrations and associated high cycle fatigue (HCF, e.g., a structural assessment of the amount of vibrational oscillations the seal can experience before cracking or failure), as well as impact, while maintaining its ability to adapt to changing gaps.

Depending on the seal delta Pressure (dP) difference between high pressure and low pressure across the seal 82 in the direction of arrow 120 the operating environment the seal is employed, the coating material 136 can be chosen to obtain a coefficient of friction against the seal ring 94, which in one non-limiting embodiment is 0.1 to 0.3. Other non-limiting ranges for such a coefficient of friction include but are not limited to 0.3 to 0.5 and 0.5 to 0.8.

Through the use of wear coating 136 the material of the seal ring 94 and the carrier ring 96 may be optimized and the seal ring 94 and the carrier ring 96 are formed as a single, monolithic member with the optimized material as there is no longer a concern that the distal end 126 of the shoes 102 will stick to the downstream plate surface 128.

In an alternative embodiment, the wear coating 136 may be applied to the distal end 126 of the shoes 102 instead of the downstream plate surface 128 of the tabs portions 138 of the seal ring 94 or alternatively, the wear coating 136 may be applied to both the distal end 126 of the shoes 102 and the downstream plate surface 128 of the tabs portions 138 of the seal ring 94.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure without departing from the scope of the claims. Therefore, it is intended that the present invention not be limited to the particular embodiment disclosed as the best mode contemplated for carrying out this present disclosure, but that the present invention will include all embodiments falling within the scope of the claims.

## Claims

1. A seal assembly (80), comprising:
a seal (82) comprising; a support ring (104), a shoe (102), and a beam (106) extending between the shoe and the support ring, wherein the shoe moves relative to the support ring via the beam;
a spacer (84) and a second seal (86; 88, 90);
a seal ring (94);
a carrier ring (96), the second seal being located adjacent to one end of the shoe (102) and the seal ring being located adjacent to an opposite end (126) of the shoe and the carrier ring extends from the seal ring to the spacer, the carrier ring being adjacent to the support ring (104) of the seal (82); and
a wear resistant coating (136) located between a surface (128) of the seal ring (94) and the opposite end of the shoe.

2. The seal assembly as in claim 1, wherein the wear resistant coating (136) is located on the surface (128) of the seal ring (94).

3. The seal assembly as in claim 1 or 2, wherein the wear resistant coating (136) is located on the opposite end (126) of the shoe (102).

4. The seal assembly as in any preceding claim, wherein the seal ring (94) has a plurality of scalloped openings (114) located between a plurality of tab portions (138) of the seal ring and the wear resistant coating (136) is located on the plurality of tab portions.

5. The seal assembly as in claim 4, wherein the wear resistant coating (136) is located in a notch (140) formed on each of the plurality of tab portions (138).

6. The seal assembly as in claim 4 or 5, wherein the plurality of scalloped openings (114) provide fluid communication to the seal (82).

7. The seal assembly as in any preceding claim, wherein the carrier ring (96) and the seal ring (94) are formed as a single unitary structure.

8. The seal assembly as in any preceding claim, wherein the wear resistant coating (136) is a cobalt based wear coating.

9. The seal assembly as in any preceding claim, wherein the secondary seal (86) comprises a first secondary seal (88) and a second secondary seal (90).

10. A gas turbine engine (20) comprising:
a compressor section (24);
a combustor (56) fluidly connected to the compressor section;
a turbine section (28) fluidly connected to the combustor;
the seal assembly (80) as in any preceding claim, located between a rotatable component (100) of the gas turbine engine and a static structure of the gas turbine engine.

11. A method of preventing a shoe (102) of a seal assembly (80) from contacting a rotatable component (100) of a gas turbine engine (20), comprising:
locating a wear resistant coating (136) between a surface (128) of a seal ring (94) and a distal end (126) of the shoe (102) of a seal (82) of the seal assembly (80) of the gas turbine engine (20), wherein the seal comprises; a support ring (104) and a beam (106) extending between the shoe and the support ring, wherein the shoe moves relative to the support ring via the beam; a spacer (84) and a second seal (86; 88, 90); a carrier ring (96), the second seal being located adjacent to one end of the shoe (102) and the seal ring (94) being located adjacent to the distal end (126) of the shoe and the carrier ring extends from the seal ring to the spacer (84), the carrier ring being adjacent to the support ring (104) of the seal (82).
